# FASCICULE DE BREVET EUROPEEN

(11) **EP 3 016 808 B1**
(45) Date de publication et mention de la délivrance du brevet: **07.08.2019**
(21) Numéro de dépôt: 14738749.2
(22) Date de dépôt: 23.06.2014
(51) Int. Cl.: B60C 11/03, B60C 11/00

(54) **PNEUMATIQUE COMPORTANT UNE BANDE DE ROULEMENT PERFECTIONNEE**
REIFEN MIT EINEM VERBESSERTEN PROFIL
TYRE COMPRISING AN IMPROVED TREAD

(30) Priorité: 01.07.2013 FR 1356387
(43) Date de publication de la demande: 11.05.2016
(73) Titulaire: Compagnie Générale des Etablissements Michelin, 63000 Clermont-Ferrand (FR)
(72) Inventeur: SCHAFFHAUSER, Luc, F-63040 Clermont-Ferrand Cedex 9 (FR); TOURNEUX, Vincent, F-63040 Clermont-Ferrand Cedex 9 (FR); HUC, Laurent, F-63040 Clermont-Ferrand Cedex 9 (FR)
(74) Mandataire: Millanvois, Patrick Jacques Jean
(86) Numéro de dépôt international: PCT/EP2014/063087
(87) Numéro de publication internationale: WO 2015/000726

(56) Documents cités:
- US-A1- 2005 167 019
- US-A1- 2007 175 557

## Description

### DOMAINE DE L'INVENTION

La présente invention concerne les pneumatiques pour véhicules de tourisme. Elle concerne plus particulièrement les pneumatiques adaptés à une conduite routière sportive.

### ARRIERE-PLAN

L'adhérence des pneumatiques sur le sol sur lequel ils roulent est une des caractéristiques les plus importantes du point de vue de la sécurité du conducteur d'un véhicule équipé de pneumatiques. Elle est aussi déterminante pour les performances du véhicule en conduite routière sportive : si ses pneumatiques perdent leur pouvoir directeur par défaut d'adhérence, le véhicule n'est plus dirigeable.

Les pneumatiques adaptés à une conduite routière sportive et destinés plus particulièrement à une utilisation sur circuit ont été perfectionnés pour offrir une excellente adhérence sur sol sec. Les manufacturiers de pneumatiques ont notamment développé des compositions caoutchouteuses pour bande de roulement permettant d'obtenir ce résultat (US2005/167019A1 & US2007/175557A1). En revanche, des pneumatiques pourvus de telles bandes de roulement souffrent souvent d'une usure prématurée.

### RESUME DE L'INVENTION

Un des objectifs de la présente invention est donc de prévoir un pneumatique pour une conduite routière sportive ayant une bonne résistance à l'usure tout en maintenant une excellente adhérence sur sol sec.

Cet objectif est atteint par un pneumatique destiné à être monté sur une jante de montage d'une roue d'un véhicule et ayant un sens de montage, sur le véhicule, prédéterminé, comportant une bande de roulement s'étendant entre un bord axial extérieur et un bord axial intérieur, le bord axial intérieur étant le bord destiné à être monté du côté de la caisse du véhicule lorsque le pneumatique est monté sur le véhicule selon ledit sens de montage prédéterminé, la distance entre le bord axial extérieur et le bord axial intérieur de la bande de roulement à l'état neuf définissant une largeur L de la bande de roulement. La bande de roulement comporte N nervures circonférentielles, N étant un nombre entier supérieur ou égal à 4 (et de préférence égal à 4), séparées par N-1 rainures circonférentielles comportant chacune deux parois latérales, la distance axiale moyenne entre les deux parois latérales de chaque rainure étant supérieure ou égale à 5 mm et inférieure ou égale à 20 mm. La nervure circonférentielle adjacente au bord axial extérieur de la bande de roulement s'étend, dans toute section radiale et sur toute la profondeur radiale de la bande de roulement, d'une première position axiale dont la distance axiale par rapport au bord axial intérieur de la bande de roulement est supérieure ou égale à 0.95·L, à une deuxième position axiale dont la distance axiale par rapport au bord axial intérieur de la bande de roulement est inférieure ou égale à 0.6·L. La nervure circonférentielle adjacente au bord axial extérieur de la bande de roulement comporte une première portion réalisée dans une première composition caoutchouteuse et une deuxième portion axialement adjacente à la première portion et réalisée dans une deuxième composition caoutchouteuse différente de ladite première composition caoutchouteuse. La première portion s'étend, dans toute section radiale et sur toute la profondeur radiale de la bande de roulement, de ladite première position axiale à une troisième position axiale dont la distance axiale par rapport au bord axial intérieur de la bande de roulement est inférieure ou égale à 0.85·L, la deuxième portion de la nervure circonférentielle s'étendant de ladite troisième position axiale jusqu'à ladite deuxième position axiale. Lesdites première et deuxième compositions caoutchouteuses comportent au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et ladite première composition caoutchouteuse a : un module d'élasticité à 300 % de déformation qui est supérieur à 1.1 fois et inférieur ou égal à 2.1 fois le module d'élasticité à 300 % de déformation de ladite deuxième composition caoutchouteuse ; une dureté Shore A qui est supérieure ou égale à 0.95 fois (et de préférence à 0.98 fois) et inférieure ou égale à 1.20 fois la dureté Shore A de ladite deuxième composition caoutchouteuse un module complexe G* à 60°C (qui est mesuré à une contrainte de 0.7 MPa) qui est supérieur ou égal à 1.00 (et de préférence 1.03 fois) et inférieur ou égal à 2.1 fois le module complexe G* à 60° C de ladite deuxième composition caoutchouteuse.

Ce pneumatique possède une bonne résistance à l'usure, notamment en conduite de type « track days », tout en maintenant une excellente adhérence sur sol sec. L'amélioration de l'usure est due à un choix astucieux de la composition caoutchouteuse formant la première portion de la nervure circonférentielle adjacente au bord axial extérieur de la bande de roulement.

Selon un premier mode de réalisation préférentiel, la première portion s'étend, dans toute section radiale et sur toute la profondeur radiale de la bande de roulement, de ladite première position axiale à une troisième position axiale dont la distance axiale par rapport au bord axial intérieur de la bande de roulement est supérieure ou égale à 0.7·L, et de préférence supérieure ou égale à 0.8·L. Ce mode de réalisation permet d'obtenir un compromis entre usure sur circuit et adhérence sur sol sec particulièrement intéressant. Si la troisième position axiale a une distance axiale par rapport au bord axial intérieur de la bande de roulement qui est inférieure à 0.7·L, le temps au tour se dégrade de manière significative.

Selon un second mode de réalisation préférentiel, le module d'élasticité à 300 % de déformation de ladite première composition caoutchouteuse est supérieur ou égal à 3 MPa et inférieur ou égal à 3.5 MPa (et de préférence 3.45 MPa). Des valeurs nettement inférieures à 3 MPa ont pour effet de dégrader l'usure ; des valeurs significativement supérieures à 3.5 MPa pénalisent l'adhérence du pneumatique.

Selon un troisième mode de réalisation préférentiel, la dureté Shore A de ladite première composition caoutchouteuse est supérieure ou égale à 67 et inférieure ou égale à 69. Des valeurs significativement inférieures à 67 ont pour effet de dégrader l'usure et le comportement sur sol sec ; des valeurs significativement supérieures à 69 pénalisent l'adhérence du pneumatique, à la fois sur sol sec et sol mouillé.

Selon un quatrième mode de réalisation préférentiel, le module complexe G* à 60°C de ladite première composition caoutchouteuse est supérieur ou égal à 1.00 et inférieur ou égal à 1.15 MPa. Des valeurs significativement inférieures à 1 ont pour effet de dégrader l'usure ; des valeurs significativement supérieures à 1.15 pénalisent l'adhérence du pneumatique, à la fois sur sol sec et sol mouillé.

Selon un cinquième mode de réalisation préférentiel, ladite première composition caoutchouteuse a un module complexe G* à 10% et 100° C qui est supérieur ou égal à 0.95 fois et inférieur ou égal à 1.25 fois (et de préférence 1.22 fois) le module complexe G* à 10% et 100° C de ladite deuxième composition caoutchouteuse.

Selon un sixième mode de réalisation préférentiel, le module complexe G* à 10% et 100° C est supérieur ou égal à 1.40 et inférieur ou égal à 1.80 MPa. Des valeurs significativement inférieures à 1.40 ont pour effet de dégrader l'usure et le comportement sur sol sec ; des valeurs significativement supérieures à 1.80 pénalisent l'adhérence du pneumatique, à la fois sur sol sec et sol mouillé.

Bien entendu, il est possible et même souhaitable de combiner deux ou plusieurs des modes de réalisations décrits.

### BREVE DESCRIPTION DES DESSINS

La figure 1 représente un pneumatique selon l'art antérieur.
La figure 2 représente une vue en perspective partielle d'un pneumatique selon l'art antérieur.
La figure 3 représente, en coupe radiale, un quart d'un pneumatique selon l'art antérieur.
Les figures 4 et 5 illustrent comment le bord axial d'une bande de roulement est déterminé.
La figure 6 illustre les termes 'bord intérieur' et 'bord extérieur' d'une bande de roulement.
La figure 7 représente schématiquement le sommet d'un pneumatique de référence, en coupe radiale.
La figure 8 illustre les différentes grandeurs caractérisant une nervure centrale.
Les figures 9 et 10 représentent schématiquement le sommet d'un pneumatique selon l'invention, en coupe radiale.

### DESCRIPTION DETAILLEE DES DESSINS

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale. Une « section circonférentielle » est une section selon un plan perpendiculaire à l'axe de rotation du pneumatique.

Par « surface de roulement » on entend ici l'ensemble des points de la bande de roulement d'un pneumatique qui sont susceptibles d'entrer en contact avec le sol lorsque le pneumatique roule.

L'expression « composition caoutchouteuse » désigne une composition de caoutchouc comportant au moins un élastomère et une charge.

Lorsqu'il est dit qu'un élément du pneumatique est réalisé dans « une » (première ou deuxième) composition caoutchouteuse, cela ne veut pas dire qu'il est nécessairement réalisé dans une seule composition caoutchouteuse ; cela englobe aussi des éléments réalisés dans une pluralité de compositions caoutchouteuses dont chacune possède les caractéristiques de ladite composition caoutchouteuse.

Par « module d'élasticité à 300 % de déformation» d'une composition caoutchouteuse, on entend le module d'extension sécant obtenu en traction selon la norme ASTM D 412 de 1998 (éprouvette « C » ; épaisseur 2.5 mm) : on mesure en seconde élongation (c'est-à-dire après un cycle d'accommodation) les modules sécants apparents à 300% d'allongement, notés « MA300 » et exprimés en MPa (conditions normales de température et d'hygrométrie selon la norme ASTM D 1349 de 1999).

Dans le présent document, les termes « module élastique G' » et « module visqueux G" » désignent des propriétés dynamiques bien connues de la personne du métier. Ces propriétés sont mesurées sur un viscoanalyseur de type Metravib VA4000 sur des éprouvettes moulées à partir de compositions crues ou sur des éprouvettes collées à partir de compositions cuites. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre « d » de l'éprouvette est de 10 mm (elle a donc une section circulaire de 78.5 mm²), l'épaisseur « L » de chacune des portions de composition caoutchouteuse est de 2 mm, ce qui donne un ration « d/L » de 5 (contrairement à la norme ISO 2856, mentionnée dans la norme ASTM, paragraphe X2.4, qui préconise une valeur d/L de 2).

Pour déterminer le module « G* à 10% de déformation et 100°C », on enregistre la réponse d'un échantillon de composition caoutchouteuse vulcanisée soumis à une sollicitation sinusoïdale en cisaillement simple alterné, à la fréquence de 10 Hz et à la température stabilisée préconisée (100°C). L'éprouvette est sollicitée symétriquement autour de sa position d'équilibre. On balaie en amplitude de déformation, de 0.1 % à 50 % (au cycler aller), puis de 50 % à 0.1 % (au cycle retour). Le résultat exploité est le module élastique de cisaillement dynamique (G') et le module visqueux de cisaillement (G") à 10 % de déformation sur le cycle retour.

La « module complexe » G* se définit comme la valeur absolue de la somme complexe des modules élastique G' et visqueux G" : G* = |G' + i·G"|.

Pour déterminer le module « G* à 60°C » on procède de la même façon, sauf qu'on enregistre la réponse de l'échantillon à une sollicitation sinusoïdale en cisaillement simple alterné, à la fréquence de 10Hz, lors d'un balayage en température entre 0° et 100°C, sous une contrainte fixe de 0.7 MPa. On détermine le module G* à partir des valeurs mesurées à la température de 60°C.

La dureté Shore A des compositions après cuisson est appréciée conformément à la norme ASTM D 2240-86.

Pour faciliter la lecture de la description des variantes montrées avec les figures, les mêmes références sont employées pour désigner des éléments de structure identiques.

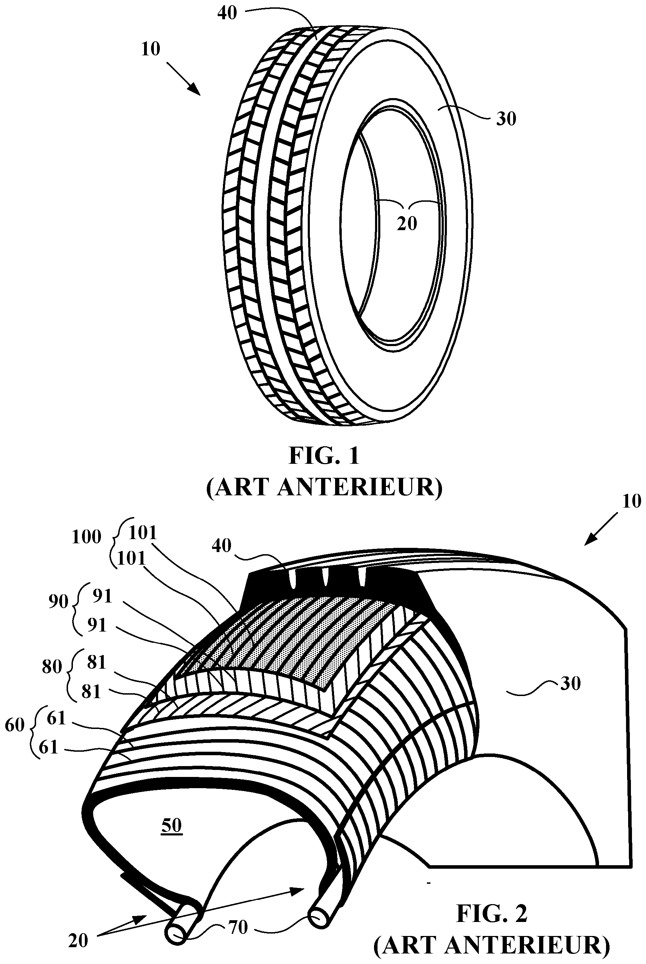

La figure 1 représente schématiquement un pneumatique 10 selon l'art antérieur. Le pneumatique 10 comporte un sommet comprenant une armature de sommet (invisible à la figure 1) surmontée d'une bande de roulement 40, deux flancs 30 prolongeant le sommet radialement vers l'intérieur, ainsi que deux bourrelets 20 radialement intérieurs aux flancs 30.

La figure 2 représente schématiquement une vue en perspective partielle d'un pneumatique 10 selon l'art antérieur et illustre les différentes composantes du pneumatique. Le pneumatique 10 comprend une armature de carcasse 60 constituée de fils 61 enrobés de composition caoutchouteuse, et deux bourrelets 20 comportant chacun des structures annulaires de renforcement 70 qui maintiennent le pneumatique 10 sur la jante (non représentée). L'armature de carcasse 60 est ancrée dans chacun des bourrelets 20. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70°. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 40 est posée sur l'armature de frettage ; c'est cette bande de roulement 40 qui assure le contact du pneumatique 10 avec la route. Le pneumatique 10 représenté est un pneu « tubeless » : il comprend une « gomme intérieure » 50 en composition caoutchouteuse imperméable au gaz de gonflage, recouvrant la surface intérieure du pneumatique.

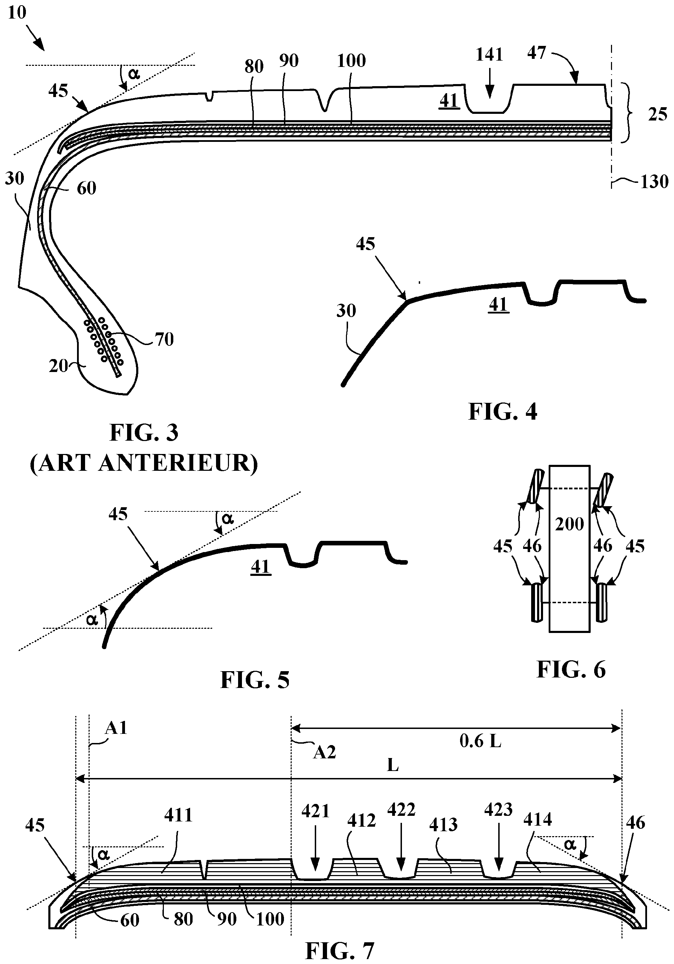

La figure 3 représente schématiquement, en coupe radiale, un quart d'un pneumatique 10 de référence, de type « Pilot Sport 2 » commercialisé par Michelin. Le pneumatique 10 comporte deux bourrelets 20 destinés à entrer en contact avec une jante de montage (non représentée), chaque bourrelet 20 comportant une pluralité de structures annulaires de renforcement 70. Deux flancs 30 prolongent les bourrelets 20 radialement vers l'extérieur et s'unissent dans un sommet 25 comprenant une armature de sommet formée d'une première couche d'éléments de renforcement 80 et d'une deuxième couche d'éléments de renforcement 90, et surmontée radialement d'une armature de frettage 100, qui est elle-même surmontée radialement d'une bande de roulement. Le plan médian du pneumatique est indiqué par la référence 130.

La manière dont on détermine les bords axiaux d'une bande de roulement est illustrée aux figures 4 et 5 qui montrent chacune le profil d'une demi-bande de roulement 41 et de la partie du flanc qui lui est adjacente. Dans certaines architectures de pneumatique, la transition de la bande de roulement vers le flanc est très nette, comme dans le cas représenté à la figure 4 et la détermination du bord axial 45 de la demi-bande de roulement 41 est intuitive. Il existe cependant des architectures de pneumatique où la transition entre bande de roulement et flanc est continue. Un exemple est représenté à la figure 5. On détermine alors le bord de la bande de roulement comme suit. On trace, dans une coupe radiale du pneumatique, la tangente à la surface de roulement du pneumatique en tout point de la surface de roulement dans la zone de transition entre la bande de roulement et le flanc. Le bord axial est le point dans lequel l'angle α (alpha) entre ladite tangente et une direction axiale est égal à 30°. Lorsqu'il existe plusieurs points pour lesquels l'angle α (alpha) entre ladite tangente et une direction axiale est égal à 30°, on retient le point radialement le plus à l'extérieur. Dans le cas du pneumatique représenté à la figure 3, le bord axial 45 a été déterminé de cette manière.

Chaque couche d'éléments de renforcement 80 et 90 comprend des éléments de renforcement filaires, enrobés dans une matrice formée de composition caoutchouteuse. Les éléments de renforcement de chaque couche sont substantiellement parallèles entre eux ; les éléments de renforcement des deux couches sont croisés d'une couche à l'autre selon un angle d'environ 20°, comme cela est bien connu de la personne du métier pour les pneumatiques dits radiaux.

Le pneumatique 10 comporte encore une armature de carcasse 60 qui s'étend depuis les bourrelets 20 à travers les flancs 30 jusqu'au sommet 25. Cette armature de carcasse 60 comporte ici des éléments de renforcement filaires orientés substantiellement radialement, c'est-à-dire faisant avec la direction circonférentielle un angle supérieur ou égal à 80° et inférieur ou égal à 90°.

L'armature de carcasse 60 comporte une pluralité d'éléments de renforcement de carcasse ; elle est ancrée dans les deux bourrelets 20 entre les structures annulaires de renforcement 70.

La figure 7 représente schématiquement le sommet d'un pneumatique de référence, destiné à être monté sur une jante de montage (non représentée) d'une roue d'un véhicule et ayant un sens de montage, sur le véhicule, prédéterminé. Ce pneumatique comporte une bande de roulement s'étendant entre un bord axial extérieur 45 et un bord axial intérieur 46, le bord axial intérieur étant le bord destiné à être monté du côté de la caisse du véhicule 200 lorsque le pneumatique est monté sur le véhicule 200 selon ledit sens de montage prédéterminé (voir figure 6). La distance entre le bord axial extérieur 45 et le bord axial intérieur 46 de la bande de roulement à l'état neuf définit une largeur L de la bande de roulement.

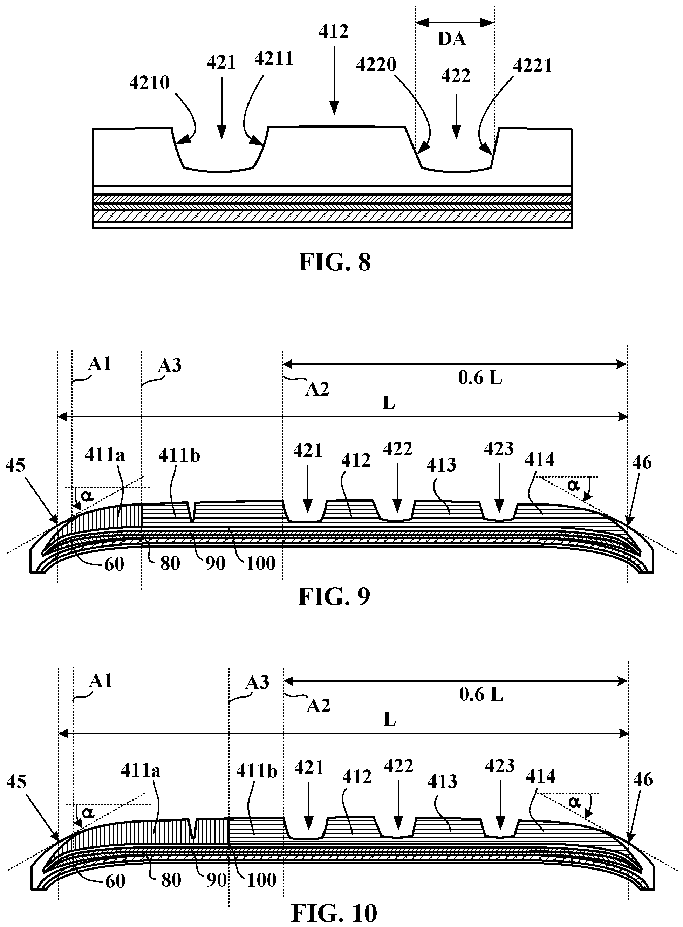

La bande de roulement comporte quatre nervures circonférentielles 411 à 414, séparées par trois rainures circonférentielles 421 à 423 comportant chacune deux parois latérales. La figure 8 montre un détail de la figure 7, à savoir la nervure 412 et les deux rainures circonférentielles 421 et 422 qui lui sont adjacentes. Chacune de ces rainures comporte des parois latérales (4210, 4211 et 4220 et 4221, respectivement) La distance axiale moyenne DA entre les deux parois latérales de chaque rainure est supérieure ou égale à 5 mm et inférieure ou égale à 20 mm.

La nervure circonférentielle 411 adjacente au bord axial extérieur 45 de la bande de roulement s'étend, dans toute section radiale et sur toute la profondeur radiale de la bande de roulement, d'une première position axiale A1 dont la distance axiale par rapport au bord axial intérieur de la bande de roulement est supérieure ou égale à 0.95·L, à une deuxième position axiale A2 dont la distance axiale par rapport au bord axial intérieur de la bande de roulement est égale à 0.6·L. En l'occurrence, les première et deuxième positions axiales A1 et A2 évoluent en fonction de la profondeur radiale de la bande de roulement ; à la figure, les positions A1 (à une distance axiale égale à 0.97·L du bord axial intérieur 46) et A2 (à une distance axiale égale à 0.60·L du bord axial intérieur 46) de la bande de roulement à l'état neuf (non usé) sont indiquées.

En l'occurrence, toute la nervure circonférentielle (et même toute la bande de roulement) est réalisée dans la même composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante.

Un tel pneumatique offre une excellente adhérence sur sol sec. En revanche, à l'utilisation sur circuit on constate une usure prématurée.

La figure 9 représente schématiquement le sommet d'un pneumatique de selon l'invention, qui permet de surmonter ce problème. Contrairement au pneumatique de référence représenté à la figure 7, la nervure circonférentielle adjacente au bord axial extérieur 45 de la bande de roulement comporte une première portion 411a réalisée dans une première composition caoutchouteuse et une deuxième portion 411b axialement adjacente à la première portion et réalisée dans une deuxième composition caoutchouteuse différente de la première composition caoutchouteuse.

La première portion 411a s'étend, dans toute section radiale et sur toute la profondeur radiale de la bande de roulement, de la première position axiale A1 à une troisième position axiale A3 dont la distance axiale par rapport au bord axial intérieur de la bande de roulement est en l'occurrence égale à 0.85·L. La deuxième portion 411b de la nervure circonférentielle s'étend de cette troisième position axiale A3 jusqu'à la deuxième position axiale A2. En l'occurrence, la troisième position axiale A3 ne varie pas en fonction de la profondeur radiale de la bande de roulement, mais il serait parfaitement envisageable de prévoir une telle variation, de manière à rendre le comportement de la bande de roulement dépendant de son état d'usure.

Les première et deuxième compositions caoutchouteuses comportent chacune au moins un élastomère et au moins une charge renforçante comportant un noir de carbone, le noir de carbone représentant un pourcentage supérieur ou égal à 50 % et inférieur ou égal à 100 % du poids de la totalité de la charge renforçante.

Dans un pneumatique selon l'invention, la première composition caoutchouteuse a :
- un module d'élasticité à 300 % de déformation qui est supérieur à 1.1 fois et inférieur ou égal à 2.1 fois le module d'élasticité à 300 % de déformation de ladite deuxième composition caoutchouteuse ;
- une dureté Shore A qui est supérieure ou égale à 0.95 fois (et de préférence 0.98 fois) et inférieure ou égale à 1.20 fois la dureté Shore A de ladite deuxième composition caoutchouteuse
- un module complexe G* à 60°C qui est supérieur ou égal à 1.0 fois (et de préférence 1.03 fois) et inférieur ou égal à 2.1 fois le module complexe G* à 60°C de ladite deuxième composition caoutchouteuse.

Le Tableau I donne, à titre d'exemple, la composition de compositions caoutchouteuses pouvant être utilisés. La composition est donnée en pce (« pour cent élastomère »), c'est-à-dire en parties en poids pour 100 parties en poids d'élastomère.

**Tableau I**

| | Première composition caoutchouteuse | Deuxième composition caoutchouteuse |
|---|---|---|
| Elastomère SBR 1739 [1] | 70 | - |
| Elastomère SBR 2382 [2] | 30 | - |
| Elastomère SBR 2158 [3] | - | 85 |
| Elastomère BR ND 343 [4] | - | 15 |
| N 134 [5] | 80 | 105 |
| Silice [6] | 25 | - |
| Agent de couplage [7] | 2 | - |
| Plastifiant TDAE [8] | 37 | 7 |
| Plastifiant MES [9] | - | 18 |
| Résine thermoplastique [10] | 24 | 40 |
| Cire ozone C32 ST | 1.5 | 1.5 |
| Agent antioxydant [11] | 2.5 | 2.5 |
| ZnO | 1.8 | 1.8 |
| Acide stéarique | 2.0 | 2.0 |
| Soufre | 1.5 | 1.0 |
| Accélérateur (CBS) | 3.5 | 2.5 |

| | | |
|---|---|---|
| Annotations au Tableau I : [1] ESBR avec 40 % de styrène, 70 % de motifs polybutadiène 1-4 trans [2] SSBR avec 40.8 % de styrène, 46.5 % de motifs polybutadiène 1-4 trans [3] SSBR avec 26.5 % de styrène, 21 % de motifs polybutadiène 1-4 trans [4] BR avec 1.2 % de motifs polybutadiène 1-4 trans [5] Noir de carbone série 130 (ASTM) [6] Silice commercialisée sous le nom 160MP par la société Rhodia [7] TESPT (« Si 69 » de la société Evonik-Degussa) [8] Huile TDAE (« Treated Distillate Aromatic Extract ») [9] Huile MES (« Mild Extract Solvate ») [10] Résine 9872 polylimonène [11] 6PPD: N-(1,3-diméthylbutyl)-N'-phényl-p-phénylènediamine | | |

Les compositions caoutchouteuses sont préférentiellement à base d'au moins un élastomère diénique, une charge renforçante et un système de réticulation.

Par élastomère (ou indistinctement caoutchouc) « diénique », on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

Un mode de réalisation préférentiel consiste à utiliser un élastomère SBR (E-SBR ou S-SBR) utilisé en coupage ou non avec un autre élastomère, par exemple du type BR.

Selon d'autres modes de réalisation, l'élastomère diénique peut être constitué, en tout ou partie, d'un autre élastomère diénique tel que, par exemple, un élastomère« isoprénique », c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est alors de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%.

La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C), des agents facilitant la mise en oeuvre (processabilité) des compositions à l'état cru, des résines tackifiantes, un système de réticulation à base soit de soufre, soit de donneurs de soufre et/ou de peroxyde, des accélérateurs, des activateurs ou retardateurs de vulcanisation, des agents antiréversion.

Les compositions sont fabriquées dans des mélangeurs appropriés, en utilisant deux phases de préparation successives bien connues de l'homme du métier : une première phase de travail ou malaxage thermomécanique (phase dite « non productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, phase de finition au cours de laquelle est incorporé le système de réticulation.

A titre d'exemple, la phase non productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

La vulcanisation (ou cuisson) peut être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

Le Tableau II donne les propriétés des compositions caoutchouteuses dont la composition est indiquée au Tableau I.

**Tableau II**

| | Première composition caoutchouteuse | Deuxième composition caoutchouteuse | Ratio |
|---|---|---|---|
| Module d'élasticité à 300 % | 3.37 | 2.33 | 1.45 |
| Shore A | 67.5 | 68.5 | 0.985 |
| G* à 60°C | 1.15 | 0.96 | 1.20 |
| G* à 10% et 100° C | 1.54 | 1.47 | 1.05 |

Des essais ont été effectués sur un véhicule Porsche 911 équipé de pneumatiques Pilot Sport Cup 2 de dimension 235/35 R19 et 305/30 R 19, sur les circuits de Nardo (Italie) et Jerez (Espagne). Un pneumatique équipé d'une bande de roulement telle que représentée à la figure 9 (utilisant les compositions caoutchouteuses du Tableau I) a été comparé, à iso-sculpture, à un pneumatique dé référence équipé d'une bande de roulement telle que représentée à la figure 7, entièrement réalisé dans la deuxième composition caoutchouteuse du Tableau I. Les pneumatiques selon l'invention ont permis de réduire de manière significative l'usure circuit (ce qui veut dire que l'usager peut effectuer environ 2 fois plus de sorties « circuit club » par rapport au pneumatique de référence) sans dégrader la performance chronométrique ; dans certains cas, le temps au tour est même légèrement réduit.

## Revendications

1. Pneumatique (10) destiné à être monté sur une jante de montage d'une roue d'un véhicule et ayant un sens de montage, sur le véhicule, prédéterminé, comportant une bande de roulement (40) s'étendant entre un bord axial extérieur (45) et un bord axial intérieur (46), le bord axial intérieur étant le bord destiné à être monté du côté de la caisse du véhicule (200) lorsque le pneumatique est monté sur le véhicule selon ledit sens de montage prédéterminé, la distance entre le bord axial extérieur et le bord axial intérieur de la bande de roulement (40) à l'état neuf définissant une largeur L de la bande de roulement ;
dans lequel la bande de roulement (40) comporte N nervures circonférentielles (411-414), N étant un nombre entier supérieur ou égal à 4, séparées par N-1 rainures circonférentielles (421-423) comportant chacune deux parois latérales (4210,4211 ;4220,4221), la distance axiale moyenne entre les deux parois latérales de chaque rainure étant supérieure ou égale à 5 mm et inférieure ou égale à 20 mm ;
dans lequel la nervure circonférentielle (411) adjacente au bord axial extérieur (45) de la bande de roulement s'étend, dans toute section radiale et sur toute la profondeur radiale de la bande de roulement, d'une première position axiale (A1) dont la distance axiale par rapport au bord axial intérieur (46) de la bande de roulement est supérieure ou égale à 0.95·L, à une deuxième position axiale (A2) dont la distance axiale par rapport au bord axial intérieur (46) de la bande de roulement est inférieure ou égale à 0.6·L ;
dans lequel la nervure circonférentielle adjacente au bord axial extérieur de la bande de roulement comporte une première portion (411a) réalisée dans une première composition caoutchouteuse et une deuxième portion (411b) axialement adjacente à la première portion et réalisée dans une deuxième composition caoutchouteuse différente de ladite première composition caoutchouteuse ;
**caractérisé en ce que** la première portion (411a) s'étend, dans toute section radiale et sur toute la profondeur radiale de la bande de roulement, de ladite première position axiale à une troisième position axiale (A3) dont la distance axiale par rapport au bord axial intérieur (46) de la bande de roulement est inférieure ou égale à 0.85·L, la deuxième portion (411b) de la nervure circonférentielle s'étendant de ladite troisième position axiale (A3) jusqu'à ladite deuxième position axiale (A2) ;
dans lequel lesdites première et deuxième compositions caoutchouteuses comportent au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et
dans lequel ladite première composition caoutchouteuse a :
un module d'élasticité à 300 % de déformation qui est supérieur à 1.1 fois et inférieur ou égal à 2.1 fois le module d'élasticité à 300 % de déformation de ladite deuxième composition caoutchouteuse ;
une dureté Shore A qui est supérieure ou égale à 0.95 fois et inférieure ou égale à 1.20 fois la dureté Shore A de ladite deuxième composition caoutchouteuse
un module complexe G* à 60°C qui est supérieur ou égal à 1.00 fois et inférieur ou égal à 2.10 fois le module complexe G* à 60°C de ladite deuxième composition caoutchouteuse.

2. Pneumatique selon la revendication 1, dans lequel la première portion (411a) s'étend, dans toute section radiale et sur toute la profondeur radiale de la bande de roulement (40), de ladite première position axiale (A1) à une troisième position axiale (A3) dont la distance axiale par rapport au bord axial intérieur (46) de la bande de roulement est supérieure ou égale à 0.7·L, et de préférence supérieure ou égale à 0.8·L.

3. Pneumatique selon l'une quelconque des revendications 1 ou 2, dans lequel le module d'élasticité à 300 % de déformation de ladite première composition caoutchouteuse est supérieur ou égal à 3.00 et inférieur ou égal à 3.5 MPa.

4. Pneumatique selon l'une quelconque des revendications 1 à 3, dans lequel la dureté Shore A de ladite première composition caoutchouteuse est supérieure ou égale à 67 et inférieure ou égale à 69.

5. Pneumatique selon l'une quelconque des revendications 1 à 4, dans lequel le module complexe G* à 60° C de ladite première composition caoutchouteuse est supérieur ou égal à 1.00 et inférieur ou égal à 1.15 MPa.

6. Pneumatique selon l'une quelconque des revendications 1 à 5, dans lequel ladite première composition caoutchouteuse a un module complexe G* à 10% et 100° C qui est supérieur ou égal à 0.95 fois et inférieur ou égal à 1.25 fois le module complexe G* à 10% et 100° C de ladite deuxième composition caoutchouteuse.

7. Pneumatique selon l'une quelconque des revendications 1 à 6, dans lequel le module complexe G* à 10% et 100° C est supérieur ou égal à 1.40 et inférieur ou égal à 1.80 MPa.

8. Pneumatique selon l'une quelconque des revendications 1 à 7, dans lequel N = 4.

9. Pneumatique selon l'une quelconque des revendications 1 à 8, dans lequel les nervures (412-414) différentes de ladite nervure circonférentielle (411) adjacente au bord axial extérieur (45) de la bande de roulement sont réalisées dans ladite deuxième composition caoutchouteuse.

## Patentansprüche

1. Luftreifen (10), der dazu bestimmt ist, auf eine Montagefelge eines Rads eines Fahrzeugs montiert zu werden und eine vorbestimmte Montagerichtung auf dem Fahrzeug hat, der einen Laufstreifen (40) aufweist, der sich zwischen einem äußeren axialen Rand (45) und einem inneren axialen Rand (46) erstreckt, wobei der innere axiale Rand der Rand ist, der dazu bestimmt ist, auf der Seite der Karosserie des Fahrzeugs (200) montiert zu werden, wenn der Luftreifen gemäß der vorbestimmten Montagerichtung auf das Fahrzeug montiert wird, wobei der Abstand zwischen dem äußeren axialen Rand und dem inneren axialen Rand des Laufstreifens (40) im Neuzustand eine axiale Breite L des Laufstreifens definiert;
wobei der Laufstreifen (40) N Umfangsrippen (411-414) aufweist, wobei N eine ganze Zahl größer als oder gleich 4 ist, getrennt durch N-1 Umfangsrillen (421-423), die je zwei Seitenwände (4210, 4211; 4220, 4221) aufweisen, wobei der mittlere axiale Abstand zwischen den zwei Seitenwänden jeder Rille größer als oder gleich 5 mm und kleiner als oder gleich 20 mm ist;
wobei die dem äußeren axialen Rand (45) des Laufstreifens benachbarte Umfangsrippe (411) sich in jedem radialen Querschnitt und über die ganze radiale Tiefe des Laufstreifens von einer ersten axialen Position (A1), deren axialer Abstand bezüglich des inneren axialen Rands (46) des Laufstreifens größer als oder gleich 0,95·L ist, zu einer zweiten axialen Position (A2) erstreckt, deren axialer Abstand bezüglich des inneren axialen Rands (46) des Laufstreifens kleiner als oder gleich 0,6·L ist;
wobei die dem äußeren axialen Rand des Laufstreifens benachbarte Umfangsrippe einen aus einer ersten Kautschukzusammensetzung hergestellten ersten Teil (411a) und einen zweiten Teil (411b) aufweist, der dem ersten Teil axial benachbart und aus einer zweiten Kautschukzusammensetzung hergestellt ist, die sich der ersten Kautschukzusammensetzung unterscheidet; **dadurch gekennzeichnet, dass** der erste Teil (411a) sich in jedem radialen Querschnitt und über die ganze radiale Tiefe des Laufstreifens von der ersten axialen Position zu einer dritten axialen Position (A3) erstreckt, deren axialer Abstand bezüglich des inneren axialen Rands (46) des Laufstreifens kleiner als oder gleich 0,85·L ist, wobei der zweite Teil (411b) der Umfangsrippe sich von der dritten axialen Position (A3) bis zur zweiten axialen Position (A2) erstreckt;
wobei die ersten und zweiten Kautschukzusammensetzungen mindestens ein Elastomermaterial und mindestens einen einen Ruß aufweisenden verstärkenden Füllstoff aufweisen, wobei der Ruß einen Prozentsatz höher als oder gleich 50% und niedriger als oder gleich 100% des Gewichts der Gesamtheit des verstärkenden Füllstoffs darstellt, und
wobei die erste Kautschukzusammensetzung hat:
einen Elastizitätsmodul bei 300% Verformung, der höher ist als das 1,1-Fache und niedriger als das oder gleich dem 2,1-Fachen des Elastizitätsmoduls bei 300% Verformung der zweiten Kautschukzusammensetzung;
eine Shore-A-Härte, die höher als das oder gleich dem 0,95-Fachen und niedriger als das oder gleich dem 1,20-Fachen der Shore-A-Härte der zweiten Kautschukzusammensetzung ist;
einen komplexen Modul G* bei 60°C, der höher als das oder gleich dem 1,00-Fachen und niedriger als das oder gleich dem 2,10-Fachen des komplexen Moduls G* bei 60°C der zweiten Kautschukzusammensetzung ist.

2. Luftreifen nach Anspruch 1, wobei der erste Teil (411a) sich in jedem radialen Querschnitt und über die ganze radiale Tiefe des Laufstreifens (40) von der ersten axialen Position (A1) bis zu einer dritten axialen Position (A3) erstreckt, deren axialer Abstand bezüglich des inneren axialen Rands (46) des Laufstreifens größer als oder gleich 0,7·L, und vorzugsweise größer als oder gleich 0,8·L ist.

3. Luftreifen nach einem der Ansprüche 1 oder 2, wobei der Elastizitätsmodul bei 300% Verformung der ersten Kautschukzusammensetzung höher als oder gleich 3,00 und niedriger als oder gleich 3,5 MPa ist.

4. Luftreifen nach einem der Ansprüche 1 bis 3, wobei die Shore-A-Härte der ersten Kautschukzusammensetzung höher als oder gleich 67 und niedriger als oder gleich 69 ist.

5. Luftreifen nach einem der Ansprüche 1 bis 4, wobei der komplexe Modul G* bei 60°C der ersten Kautschukzusammensetzung höher als oder gleich 1,00 und niedriger als oder gleich 1,15 MPa ist.

6. Luftreifen nach einem der Ansprüche 1 bis 5, wobei die erste Kautschukzusammensetzung einen komplexen Modul G* bei 10% und 100°C hat, der höher als das oder gleich dem 0,95-Fachen und niedriger als das oder gleich dem 1,25-Fachen des komplexen Moduls G* bei 10% und 100°C der zweiten Kautschukzusammensetzung ist.

7. Luftreifen nach einem der Ansprüche 1 bis 6, wobei der komplexe Modul G* bei 10% und 100°C höher als oder gleich 1,40 und niedriger als oder gleich 1,80 MPa ist.

8. Luftreifen nach einem der Ansprüche 1 bis 7, wobei gilt N = 4.

9. Luftreifen nach einem der Ansprüche 1 bis 8, wobei die Rippen (412-414) anders als die dem äußeren axialen Rand (45) des Laufstreifens benachbarte Umfangsrippe (411) aus der zweiten Kautschukzusammensetzung hergestellt sind.

## Claims

1. Tyre (10) intended to be mounted on a mounting rim of a vehicle wheel and having a predetermined direction of mounting on the vehicle, comprising a tread (40) extending between an outboard axial edge (45) and an inboard axial edge (46), the inboard axial edge being the edge intended to be mounted on the side facing the body shell of the vehicle (200) when the tyre is mounted on the vehicle in the said predetermined direction of mounting, the distance between the outboard axial edge and the inboard axial edge of the tread in the new state defining a width L of the tread (40);
in which the tread (40) comprises N circumferential ribs (411-414), N being a whole number greater than or equal to 4, separated by N-1 circumferential grooves (421-423) each one comprising two lateral walls (4210, 4211; 4220, 4221), the mean axial distance between the two lateral walls of each groove being greater than or equal to 5 mm and less than or equal to 20 mm;
in which the circumferential rib (411) adjacent to the outboard axial edge of the tread extends, in any radial section and over the entire radial depth of the tread, from a first axial position (A1), of which the axial distance with respect to the inboard axial edge (46) of the tread is greater than or equal to 0.95·L, to a second axial position (A2), of which the axial distance with respect to the inboard axial edge (46) of the tread is less than or equal to 0.6·L;
in which the circumferential rib adjacent to the outboard axial edge of the tread comprises a first portion (411a) made from a first rubber composition and a second portion (411b) axially adjacent to the first portion and made from a second rubber composition different from the said first rubber composition;
**characterized in that** the first portion (411a) extends, in any radial section and over the entire radial depth of the tread, from the said first axial position to a third axial position (A3) of which the axial distance with respect to the inboard axial edge (46) of the tread is less than or equal to 0.85·L, the second portion of the circumferential rib extending from the said third axial (A3) position to the said second axial position (A2);
in which the said first and second rubber compositions comprise at least one elastomer and at least one reinforcing filler comprising a carbon black, the carbon black representing a percentage greater than or equal to 50% and less than or equal to 100% of the weight of all of the reinforcing filler, and
in which the said first rubber composition has:
an elastic modulus at 300% deformation which is greater than 1.1 times and less than or equal to 2.1 times the elastic modulus at 300% deformation of the said second rubber composition;
a Shore A hardness which is greater than or equal to 0.95 times and less than or equal to 1.20 times the Shore A hardness of the said second rubber composition;
a complex modulus G* at 60°C which is greater than or equal to 1.00 times and less than or equal to 2.10 times the complex modulus G* at 60°C of the said second rubber composition.

2. Tyre according to Claim 1, in which the first portion (411a) extends, in any radial section and over the entire radial depth of the tread (40), from the said first axial position (A1) to a third axial position (A3) of which the axial distance with respect to the inboard axial edge (46) of the tread is greater than or equal to 0.7·L, and preferably greater than or equal to 0.8·L.

3. Tyre according to either one of Claims 1 and 2, in which the elastic modulus at 300% deformation of the said first rubber composition is greater than or equal to 3.00 and less than or equal to 3.5 MPa.

4. Tyre according to any one of Claims 1 to 3, in which the Shore A hardness of the said first rubber composition is greater than or equal to 67 and less than or equal to 69.

5. Tyre according to any one of Claims 1 to 4, in which the complex modulus G* at 60°C of the said first rubber composition is greater than or equal to 1.00 and less than or equal to 1.15 MPa.

6. Tyre according to any one of Claims 1 to 5, in which the said first rubber composition has a complex modulus G* at 10% and 100°C which is greater than or equal to 0.95 times and less than or equal to 1.25 times the complex modulus G* at 10% and 100°C of the said second rubber composition.

7. Tyre according to any one of Claims 1 to 6, in which the complex modulus G* at 10% and 100°C is greater than or equal to 1.40 and less than or equal to 1.80 MPa.

8. Tyre according to any one of Claims 1 to 7, in which N = 4.

9. Tyre according to any one of Claims 1 to 8, in which the ribs (412-414) other than the said circumferential rib (411) adjacent to the outboard axial edge (45) of the tread are made in the said second rubber composition.
